# EUROPÄISCHE PATENTANMELDUNG

(11) **EP 0 606 652 A1**
(43) Veröffentlichungstag der Anmeldung: **20.07.1994**
(21) Anmeldenummer: 93121102.3
(22) Anmeldetag: 30.12.1993
(51) Int. Cl.: A01D 45/26

(54) **Kohlerntemaschine**

(30) Priorität: 13.01.1993 DE 9300376 U
(71) Anmelder: Horsch, Hellmut, D-85055 Ingolstadt (DE); Wöhrl, Franz, D-85051 Ingolstadt (DE)
(72) Erfinder: Horsch, Hellmut, D-85055 Ingolstadt (DE); Wöhrl, Franz, D-85051 Ingolstadt (DE)
(74) Vertreter: Wasmeier, Alfons, Dipl.-Ing.

(57) **Zusammenfassung**

Bei einer Kohlerntemaschine mit einer Aushebe-, einer Schneid-, einer Förder- sowie einer Reinigungs- und Putzvorrichtung (14) besteht die Schneidvorrichtung (11) aus einer waagrechten, schnellaufenden Schneidscheibe, die mit einer Umfangsgeschwindigkeit gleich einem Vielfachen der Fahrgeschwindigkeit angetrieben ist, und die Reinigungs- und Putzvorrichtung (14) aus mindestens zwei parallelen, angetriebenen Förderwellen (10), deren Abstand voneinander kleiner ist als der Mindestdurchmesser eines Kohlkopfes. Die Förderwellen (10) haben die gleiche Drehrichtung, und bewirken, daß die Kohlköpfe einzeln nacheinander eine Rollbewegung ausführen.

## Beschreibung

Die Erfindung betrifft eine Kohlerntemaschine nach dem Oberbegriff des Anspruches 1.

Derartige Maschinen arbeiten mit starren Aufnahmestäben bzw. -zinken, die zum Bergen bzw. Ausheben der Kohlköpfe links und rechts der in Reihe hintereinanderstehenden Kohlköpfe über den Erdboden schleifen. Die angehobenen Kohlköpfe werden über miteinander zusammenwirkende, stehende Förderriemen nach hinten an eine Schneidvorrichtung transportiert, die von zwei liegend angeordneten, zueinander laufenden Schneidscheiben gebildet ist, welche mit einer Umfangsgeschwindigkeit angetrieben werden, die etwas größer als die Fahrgeschwindigkeit ist. Bei einer derartigen Anordnung der Bergungs- und Schneidvorrichtung tritt das Problem auf, daß sich Unkraut, Krautblätter und dergl. Pflanzenrückstände in Verbindung mit dem Erdreich festwickeln und zum Verstopfen des Erntebereiches der Maschine führen. Ferner haben die bekannten Schneidmesser den Nachteil, daß sie aufgrund ihrer geringen Drehzahl beim Abschneiden des Strunkes vom Kohlkopf gegen den Kopf drücken und ihn beim Abschneiden verkanten können, so daß kein einwandfreier, gerader Schnitt erzielt wird. Auch ist bei dieser Anordnung die Bodenfreiheit wegen der Verwendung stehender Förderbänder sehr gering, so daß dies die Gefahr des Verstopfens weiter erhöht.

Kohlköpfe, die keinen sauberen, ebenen Schnitt haben, lassen sich nur sehr schwierig und mit erheblichem Aufwand einwandfrei putzen, so daß die die bekannten Maschinen verlassenden Kohlköpfe häufig nicht ausreichend sauber, d.h. weißgeputzt sind, und damit der Aufwand für ein Nachputzen in der Regel sehr erheblich ist. Nach dem Verlassen der Schneidvorrichtung rollen die Kohlköpfe auf eine nachgeschaltete, ansteigende Fördervorrichtung und werden dann auf einem Steigband hochgefördert. Ein derartiges Steigband ist ein Förderband, auf dessen Oberfläche Querwände bzw. Querstege angeordnet sind, so daß einzelne Kammern entstehen, in denen die Kohlköpfe beim Hochfördern aufgenommen werden. Etwa in Kniehöhe schließt ein waagrechtes Förderband an, das die Nachputzstelle bildet, an der einige Arbeiter damit beschäftigt sind, jeweils einen Kohlkopf von dem tiefliegenden Förderband aufzunehmen, sich aufzurichten, den Kohlkopf in den Arm zu nehmen und mit einem Schneidmesser von Hand die Blätter bzw. verbliebenen Strunkteile zu entfernen, damit der Kohlkopf von Hand den weißgeputzten Zustand erhält; anschließend wird der Kohlkopf von dem Arbeiter auf ein Überladeband abgelegt, das im vorderen Bereich des Förderbandes im rechten Winkel von diesem wegführt. Dieses Überladeband ist zumindest für die im hinteren Bereich der Maschine arbeitenden Personen nur sehr schwierig zu erreichen, so daß für diese das Ablegen besonders anstrengend ist. Generell gilt, daß durch die tiefliegende Anordnung des Förderbandes eine dauernde Bückbewegung in Verbindung mit der anstrengenden Putzarbeit vorgenommen werden muß. Die mit solchen bekannten Maschinen zu verrichtende Nachputzarbeit ist anstrengend, aufwendig und außerordentlich unbeliebt.

Aufgabe der Erfindung ist es, das Ernten der Kohlköpfe weiter zu vereinfachen, soweit wie möglich zu automatisieren und möglichst störungsfreie und selbsttätig wirkende Berge- und Putzvorrichtungen vorzusehen, so daß insgesamt eine Kohlkopf-Vollerntemaschine erzielt wird.

Diese Aufgabe wird gemäß der Erfindung mit den Merkmalen des Kennzeichens des Anspruches 1 gelöst. Weitere Ausgestaltungen der Erfindung sind Gegenstand der Unteransprüche.

Mit vorliegender Erfindung wird ein Kohl-Vollernter vorgeschlagen, mit dem Kohlköpfe bzw. Krautköpfe "weiß-", d.h. fertiggeputzt werden können, die Köpfe somit weitgehend maschinell und selbsttätig den Zustand erreichen, der für die Ablieferung beim Großverbraucher gefordert wird. Dies erfordert, daß einerseits der Kohlkopf sauber und eben vom Strunk getrennt wird, damit der spätere Putzvorgang optimal durchgeführt werden kann, und die Blätter, die spiralförmig um den Strunk versetzt gewachsen sind, im Außenbereich gleichmäßig und einfach entfernt werden können, und daß andererseits in der Maschine Vorkehrungen getroffen sind, die ein sauberes Putzen der in einem zwischen Schneidvorrichtung und Putzvorrichtung eingeschalteten Vorputzfördersystem grob vorgeputzten Kohlköpfe bewirken, so daß ein Nachputzen im wesentlichen entfällt und der Nachputzvorgang sich im allgemeinen auf eine Überprüfung bzw. auf solche Kohlköpfe, die fehlerhafte Stellen haben, an denen ein Nachputzen von Hand bzw. ein Aussortieren der Kohlköpfe erforderlich ist, beschränken kann.

Das einwandfreie Ernten der Kohlköpfe, das grundlegende Voraussetzung für das Funktionieren eines derartigen Vollernters ist, wird gemäß der Erfindung dadurch erreicht, daß die Zentrier- und Zuführspitzen rotierend angetrieben fortlaufend drehend an der Bodenoberfläche geführt werden, wodurch die Kohlköpfe angehoben, mittig ausgerichtet und an die nachgeschalteten, angetriebenen Berge- und Förderschnecken übergeben werden, die den Strunk aus dem Boden ziehen und den Kohlkopf in einwandfrei stehendem Zustand der Schneidvorrichtung zuführen. Diese Schneidvorrichtung wird mit hoher Drehgeschwindigkeit, vorzugsweise mit einem Vielfachen der Fahrgeschwindigkeit angetrieben, so daß das Schneidmeser mit relativ geringer Kraft und mit minimalem Druck den Strunk vom Kohlkopf trennt und damit ein Verkanten des Kohlkopfes durch den Schneidvorgang vermieden und ein sauberer ebener Schnitt unmittelbar an der je nach Einstellung vorgesehenen Stelle des Übergangs vom Strunk in den Kohlkopf erzielt wird, was in Hinblick auf ein einwandfreies automatisches Putzen von entscheidender Bedeutung ist. Der Aufnahme-, Transport- und Schneidvorgang wird unterstützt durch ein oberhalb der Berge- und Förderschnecken und dem Messer laufendes Tast- und Führband, das den Kohlkopf von oben festhält und damit einem ungleichmäßigen Berge- und Schneidvorgang entgegenwirkt. Die äußersten, relativ losen Blätter des Kohlkopfes werden in dem Vorputzer-Förderbandsystem entfernt, indem der Kohlkopf auf dem Förderer rollend bewegt wird.

Das eigentliche Putzen der Kohlköpfe erfolgt in der speziell ausgebildeten und besonders zweckmäßig ausgebildeten, erfindungsgemäßen Putzvorrichtung, die aus einer Reihe von parallel zueinander angeordneten Wellen mit Förder- und Putzelementen besteht, wobei die einzelnen Wellen miteinander zu einer Trogform angeordnet sind, in der die Kohlköpfe in Durchlaufrichtung bewegt und durch die auf den Wellen befindlichen Ansätze, wie z.B. Schraubenwindungen bzw. Gewindegänge, in zwangsweise rollende Bewegung versetzt werden und damit die äußeren Blätter, die bei einem weißgeputzten Kohlkopf nicht mehr vorhanden sein dürfen, entfernt werden. Diese Wellen der Putzvorrichtung sind im Abstand zueinander sowohl in der Breite als in der Höhe einstellbar, und die Wellen sind mit unterschiedlicher, einstellbarer Drehzahl antreibbar, so daß den jeweiligen Gegebenheiten, z.B. Verschmutzungsgrad, Wachstum usw. der Kohlköpfe Rechnung getragen werden kann.

Die so geputzten Kohlköpfe, die im wesentlichen fertig bzw. weißgeputzt sind, werden anschließend über ein weiteres Förderband an einer Nachputzstation vorbeigeführt. Das Nachputzband ist in Arbeitshöhe bzw. in Höhe des Arbeitstisches geführt; sowohl das Nachputzband als auch der Arbeitstisch haben eine relativ geringe Breite, so daß der Arbeiter an dieser Nachputzstation bequem und ergonomisch optimal den Kohlkopf von dem Nachputzband auf den Arbeitstisch rollen bzw. heben, dort untersuchen, evtl. noch fertigputzen und auf das parallel und in gleicher Höhe zum Putzband angeordnete Abförderband ablegen kann; damit wird die Anstrengung des Nachputzens auf ein Minimum herabgesetzt bzw. läßt sich der Nachputzvorgang optimal durchführen. Insbesondere kann der Kohlkopf beim Überprüfen und eventuellen Nachputzen oder Ausschneiden auf den Arbeitstisch aufgelegt werden und braucht nicht, wie dies bisher erforderlich ist, in den Arm genommen und dort praktisch freihändig geputzt werden. Von dem Nachputzförderband wird der weißgeputzte Kohlkopf dann z.B. über ein Abförderband auf einen Transportwagen übergeben.

Während bei bekannten Kohlerntemaschinen der Schlepper die Erntemaschine verfährt, und der Transportwagen von einem gesonderten Schlepper nebenher gefahren wird, wird im Falle der Erfindung vorgeschlagen, die Erntemaschine und die Übergabevorrichtung von der Erntemaschine auf den Transportwagen so auszubilden, daß der Transportwagen zusammen mit der Erntemaschine vom Schlepper gezogen werden kann. Traktor, Maschine und Anhänger bilden beim Erntevorgang eine hintereinander geschaltete Zugeinheit. Damit entfällt der Einsatz eines zweiten Schleppers und eines zweiten Schlepperfahrers, wodurch sich eine wesentliche Einsparung erzielen läßt.

Nachstehend wird die Erfindung in Verbindung mit der Zeichnung anhand eines Ausführungsbeispieles erläutert. Es zeigt:

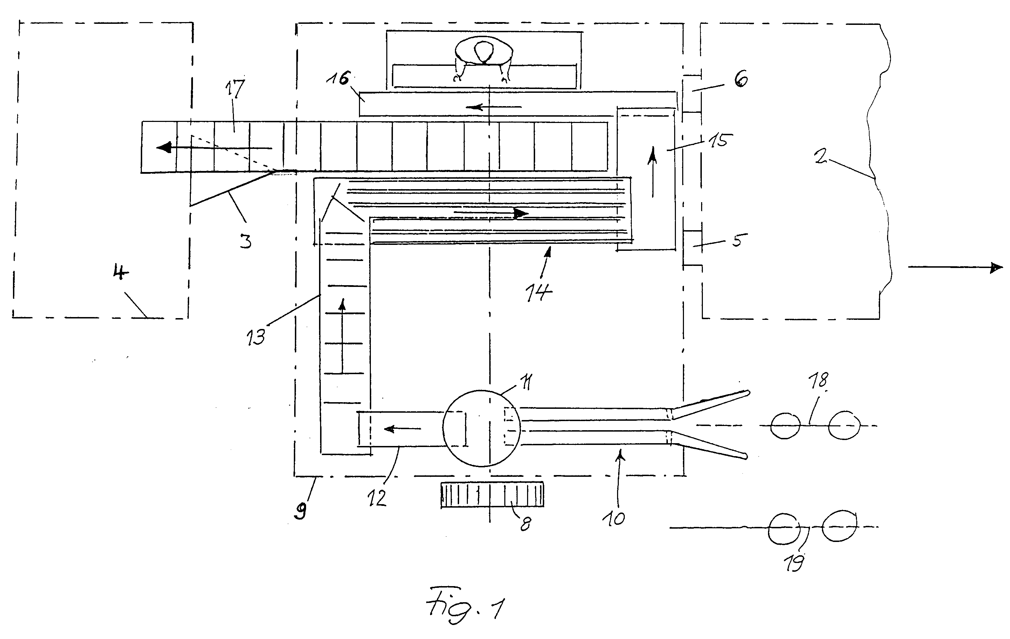

- Fig. 1: eine schematische Gesamtansicht der Maschine nach der Erfindung,

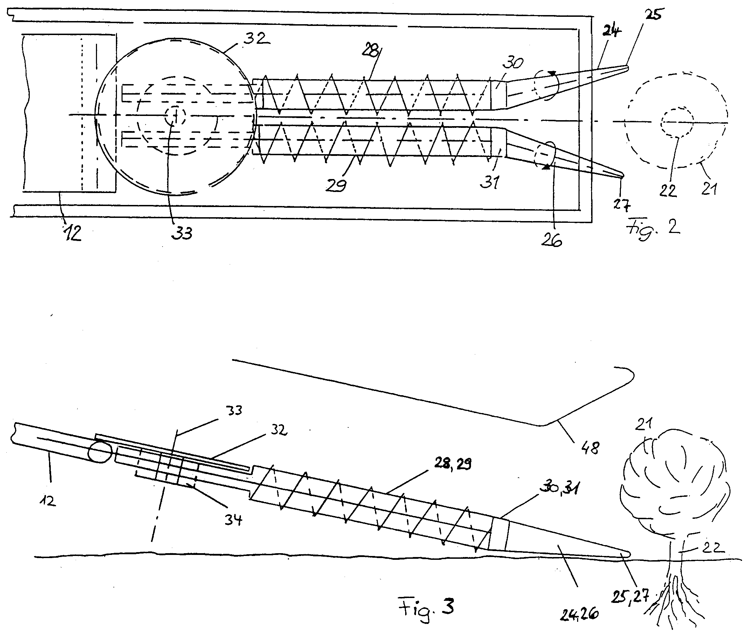

- Fig. 2: eine Berge- und Schneidvorrichtung der Maschine nach der Erfindung in Aufsicht,
- Fig. 3: eine Seitenansicht der Berge- und Schneidvorrichtung nach Fig. 1,

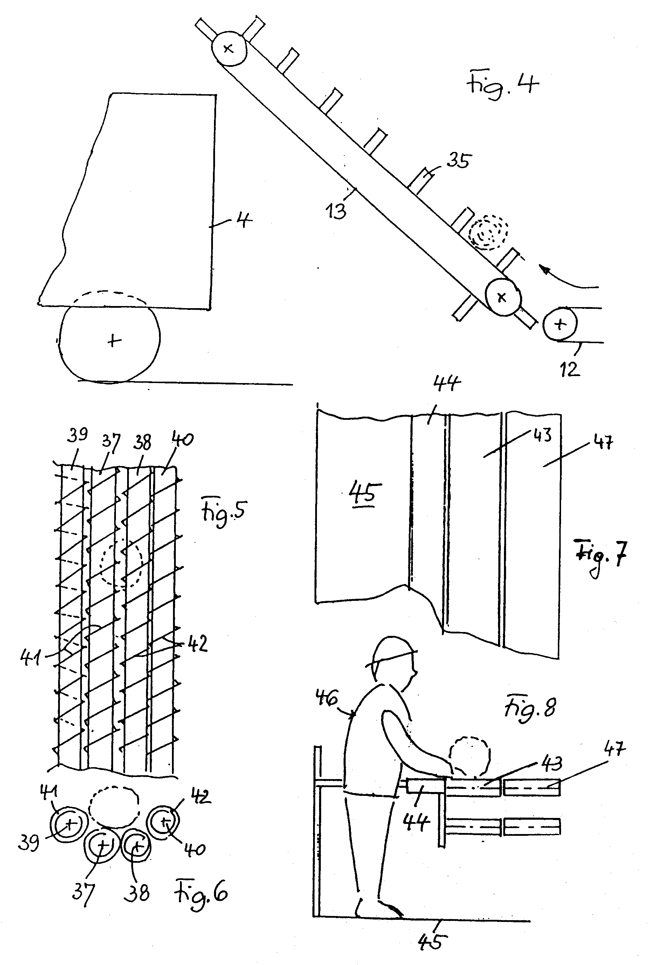

- Fig. 4: eine Seitenansicht eines Steigbandes,
- Fig. 5: eine Aufsicht auf die Putzvorrichtung nach der Erfindung,
- Fig. 6: eine Schnittansicht durch die Putzvorrichtung nach Fig. 5,
- Fig. 7: eine Aufsicht auf die Nachputzstation mit Sammelband und
- Fig. 8: eine Seitenansicht der Nachputzstation.

Die Kohlerntemaschine 1 wird von einem Schlepper 2 angetrieben, der über eine Anhängervorrichtung 3 mit einem Transportwagen 4 verbunden ist, auf den die geputzten Kohlköpfe übergeben werden. Die Maschine 1 ist über lösbare Verbindungsträger 5 und 6 mit dem Schlepper 2 gekoppelt und wird von diesem getragen, wobei ein Stützrad 8 einen Teil der Last aufnimmt. Der Rahmen der Maschine 1 ist strichpunktiert schematisch mit 9 dargestellt. Die Maschine 1 umfaßt eine Kohlkopfbergevorrichtung 10, eine Schneidvorrichtung 11, ein Abförderband 12, ein Steigband 13, eine Putzvorrichtung 14, ein die geputzten Köpfe aufnehmendes horizontales Förderband 15, eine Nachputzstation 16 und ein Abförderband 17, das die weißgeputzten Kohlköpfe an den Transportwagen 4 übergibt. Die zu erntende Kohlkopfreihe ist mit 18 bezeichnet, die benachbarte, als nächstes zu erntende Reihe mit 19. Alternativ kann bei einer größeren Erntemaschine auch mehr als eine Reihe auf einmal geerntet werden und beispielsweise die Berge- und Schneidvorrichtung für zwei oder mehr Reihen ausgelegt sein. Der bereits abgeerntete Teil des Feldes ist schematisch mit 20 bezeichnet.

Ein einzelner Kohlkopf 21 mit seinem im Boden gewachsenen und teilweise aus dem Boden vorstehenden Strunk 22 mit Wurzel ist in Fig. 3 schematisch dargestellt. 23 bezeichnet einen Kastenrahmen, der Teil des Gesamtmaschinenrahmens 9 ist und der die Berge-und Schneidwerkzeuge aufnimmt, die in Form von Zentrier- und Zuführspitzen 24, 25, 26, 27, Förder- und Bergeschnecken 28, 29 und Schneidscheibe 32 ausgebildet sind. Die Zentrier- und Zuführsppitzen 24, 26 mit ihren über den Boden tastenden Spitzen 25, 27 sind rotierend angetrieben ausgebildet. Sie laufen V-förmig auseinander und sind zu den schräg nach oben weisenden Förder- und Bergeschnecken 28, 29 hin angewinkelt. Bei ihrer Vorwärtsbewegung aufgrund der Fahrbewegung der Erntemaschine nehmen sie den Kohlkopf 22 zwischen sich auf und führen ihn den Berge- und Förderschnekken 28, 29 mittig zu. Diese fassen den Strunk knapp über der Erdoberfläche und ziehen ihn durch ihre drehende Bewegung in senkrechter Richtung aus dem Boden. Ein über den Berge- und Förderschnecken laufendes Tastband 48 drückt den Kohlkopf gleichzeitig nach unten, so daß gewährleistet ist, daß die Kohlpflanze beim Roden nicht insgesamt nach oben aus den Berge-und Förderschnecken herausgehoben wird. Die Zentrier- und Zuführspitzen 24, 26 sind mit den Berge- und Förderschnecken 28, 29 antriebsmäßig über Gelenke 30, 31 verbunden, die eine Verstellung des Öffnungswinkels der Spitzen 24, 26 ermöglichen.

Die Berge- und Förderschnecken 28, 29 rotieren in entgegengesetzten Richtungen so, daß der Kohlkopf entgegen der Fahrtrichtung festgehalten und transportiert wird, bis er in Eingriff mit dem horizontal angeordneten Schneidmesser 32 kommt, das auf einer vertikalen Achse 33 drehbar gelagert ist. Vorzugsweise sitzt auf der Welle 33 ein Antrieb 34, der das Schneidmesser 32 in Drehung versetzt. Anstelle eines derartigen besonders einfachen und zweckmäßigen Direktantriebes kann der Antrieb des Schneidmessers 32 auch über ein Getriebe, eine Kette oder dergl. erfolgen, wobei ein direkter Antrieb insbesondere in Hinblick auf die verhältnismäßig hohe Drehgeschwindigkeit des Schneidmessers bevorzugt ist. Das Schneidmesser 32 kommt mit seiner Umfangsschneide, die z.B. durch eine Vielzahl von Schneidzähnen gebildet ist, mit dem Strunk dort in Eingriff, wo der Strunk in den Kohlkopf übergeht, so daß der Strunk restlos von dem Kohlkopf getrennt wird und der Kohlkopf sauber abgeschnitten über das Schneidmesser 32 nach rückwärts gefördert wird und dort auf ein Abförderband 12 und von dort auf einen Steigförderer 13 gelangt, in der Regel ein umlaufendes Förderband, das Querwände oder Querstege 35 in Umfangsrichtung versetzt aufweist, die einzelne Kammern oder Abteile 36 für einen oder mehrere Kohlköpfe bilden. Von dem Steigförderer 13 werden die Kohlköpfe nacheinander auf eine Putzvorrichtung 14 übergeben, die aus mehreren parallel zueinander angeordneten Förderwellen bzw. Förderschnecken 37, 38, 39, 40 besteht, die in einem Abstand voneinander, der kleiner als der Mindestdurchmesser eines Kohlkopfes ist, angeordnet sind, deren gegenseitiger Abstand einstellbar ist, die horizontal verlaufen und in ihrer Neigung zur Horizontalen angestellt und abgesenkt werden können, und deren Drehgeschwindigkeit veränderbar ist.

Diese Schnecken bzw. Wellen weisen wendelförmige Erhebungen 41, 42 in Form von Schraubgewindegängen oder dergl. auf, die in gleicher Richtung gerichtet sind, so daß die auf diesen Schnecken angeordneten Kohlköpfe in Pfeilrichtung bewegt werden und dabei eine kontinuierliche Rollbewegung ausführen, wodurch die Oberfläche der Kohlköpfe bei der kontinuierlichen Rollbewegung laufend mit den Erhebungen der Gewindegänge oder dergl. in Eingriff kommt und damit die äußeren, grünen Blätter vom Kohlkopf getrennt werden. Die Putzstrecke kann dadurch verlängert oder verkürzt werden, daß die Schnecken oder dergl. in Bewegungsrichtung ansteigend oder abfallend angestellt werden, so daß damit bei ein und derselben Putzstreckenlänge die Verweildauer der Kohlköpfe in der Putzvorrichtung verlängert werden kann. Wie die Praxis gezeigt hat, ergibt dies eine ausgezeichnete Reinigungswirkung, so daß die Kohlköpfe nach Verlassen der Putzvorrichtung 16 "weißgeputzt" sind, d.h. den Zustand erreicht haben, in dem sie an die Fabrik geliefert werden können. Die derart weißgeputzten Kohlköpfe werden von der Putzvorrichtung 14 auf ein horizontales Übernahmeband 15 übergeben, von wo aus sie in eine Nachputzstation 16 gelangen, in der die Kohlköpfe von Hand verlesen bzw. geprüft werden, beispielsweise Schadstellen ausgebessert oder einzelne Kohlköpfe aussortiert werden, oder aber am einen oder anderen Kohlkopf ein Nachputzen vorgenommen wird.

Diese Nachputzstation besteht aus einem horizontalen, schmalen Förderband 43, einem schmalen Putztisch 44, der mehr die Breite einer Putzleiste hat, und einer Standfläche 45, auf der ein Arbeiter 46 die vorbeiwandernden Kohlköpfe prüft, die schadhaften bzw. nachzuputzenden Kohlköpfe auf den Putztisch 44 auflegt, dort den Nachputzvorgang durchführt und den in dieser Weise nachgeputzten Kohlkopf wieder auf das parallel zum Nachputzband 43 angeordnete Sammelband 47 legt. Die Oberseite des Nachputzbandes 43 und die Oberseite des Putztisches 44 sowie die Oberseite des Sammelbandes 47 haben gleiche Höhe, damit der Arbeiter mit minimalem Kraftaufwand den nachzuputzenden Kohlkopf handhaben kann. Vom Sammelband 47 gelangen die nachgeputzten Kohlköpfe auf ein weiteres Förderband 17, das die Kohlköpfe auf den Transportwagen 4 übergibt.

## Patentansprüche

1. Kohlerntemaschine mit einer Vorrichtung zum geführten Ausheben von Kohlköpfen aus dem Erdreich, einer Schneidvorrichtung zum Trennen von Kohlkopf und Strunk, und einer Fördervorrichtung zum Abfördern und Vorputzen der einzelnen ungeputzten Kohlköpfe an eine Reinigungs- bzw. Putzvorrichtung sowie zu einer weiteren Fördervorrichtung, die die geputzten Kohlköpfe auf einen Transportwagen übergibt,
**dadurch gekennzeichnet,** daß
a) die Schneidvorrichtung (11) eine waagrechte, schnell-laufende Schneidscheibe (32) ist, die mit einer Umfangsgeschwindigkeit gleich einem Vielfachen der Fahrgeschwindigkeit angetrieben ist, und die einen sauberen und ebenen Schnitt am Übergang zwischen Kohlkopf und Strunk ergibt, und
b) die Reinigungs- und Putzvorrichtung (14) aus mindestens zwei parallelen, angetriebenen, Förderelemente (41, 42) auf ihrer Oberfläche aufweisenden Förderwellen (37 - 40) besteht, deren Abstand voneinander kleiner ist als der Mindestdurchmesser eines Kohlkopfes, deren Drehrichtung gleich ist, und auf denen die Kohlköpfe einzeln nacheinander bei der Weiterbeförderung mit den Förderelementen eine die Reinigungs- und Putzwirkung ergebende Rollbewegung ausführen.

2. Kohlerntemaschine nach Anspruch 1, dadurch gekennzeichnet, daß im Anschluß an die selbsttätig arbeitende Reinigungs- und Putzvorrichtung (14) eine Kontroll- und Nachputzvorrichtung (16) vorgesehen ist, in der von Hand die geputzten Kohlköpfe endkontrolliert und erforderlichenfalls Schadstellen beseitigt werden, und die aus einem Nachputzband (43) und einer auf gleicher Höhe unmittelbar dem Nachputzband zugeordneten Arbeitsfläche bzw. einem Putztisch (44) besteht.

3. Kohlerntemaschine nach Anspruch 1, dadurch gekennzeichnet, daß die Wellen (37 - 40) der Reinigungs- und Putzvorrichtung (14) Schneckenwellen sind, deren Wendeln in gleicher Vorwärtsrichtung arbeiten.

4. Kohlerntemaschine nach Anspruch 1 oder 3, dadurch gekennzeichnet, daß vier Schneckenwellen (37 - 40) parallel zueinander und im Abstand voneinander vorgesehen sind, von denen die beiden mittleren (37, 38) auf einer unteren Ebene und die beiden äußeren (39, 40) höherliegend angeordnet sind, derart, daß die vier Wellen miteinander einen Trog bilden.

5. Kohlerntemaschine nach einem der Ansprüche 1, 3 oder 4, dadurch gekennzeichnet, daß die Drehgeschwindigkeit der Wellen (37 - 40) stufenlos einstellbar ist.

6. Kohlerntemaschine nach einem der Ansprüche 1 - 5, dadurch gekennzeichnet, daß die Steigung der Wellen (37 - 40) stufenlos einstellbar ist.

7. Kohlerntemaschine nach Anspruch 2, dadurch gekennzeichnet, daß Nachputzband (43), Putztisch (44) und Standfläche (45) für die arbeitenden Personen als Nachputzeinheit (16) mit dem Rahmen (9) der Kohlerntemaschine starr befestigt und in ergonomisch optimaler Arbeitshöhe angeordnet sind.

8. Kohlerntemaschine nach Anspruch 6, dadurch gekennzeichnet, daß das Nachputzband (43) ein relativ schmales Förderband ist, und daß der Putztisch (44) eine schmale Tischplatte darstellt, derart, daß die Arbeitsperson am Putztisch den Kohlkopf bequem und mit geringem Aufwand vom Nachputzband (43) auf den Putztisch (44) heben bzw. rollen, überprüfen, ggfs. nachputzen und dem weiteren Ablauf zuführen kann.

9. Kohlerntemaschine nach Anspruch 7, dadurch gekennzeichnet, daß parallel zum Nachputzband (43) ein Sammelband (47) in gleicher Höhe angeordnet ist, auf das der fertig geputzte Kohlkopf abgelegt wird.

10. Kohlerntemaschine nach Anspruch 1, mit zwei Zentrier- und Zuführspitzen, die V-förmig nach vorne geöffnet sind und den Kohlkopf knapp über dem Erdboden unterfahren und anheben, und mit einer Berge- und Fördervorrichtung, die den Strunk festklemmt, den Kohlkopf mit Strunk führt und in der aufrechten Position hält, bis die Schneidvorrichtung Kohlkopf und Strunk voneinander trennt und nach hinten an eine Weiterfördervorrichtung abgibt, dadurch gekennzeichnet, daß
a) die Zentrier- und Zuführspitzen (24, 26) rotierend angetrieben sind, und
b) die Berge- und Fördervorrichtung (28, 29) aus zwei miteinander zusammenwirkenden, rotierenden Schnecken besteht, an deren vorderem Ende die Zentrier- und Zuführspitzen (24, 26) angeordnet sind.

11. Kohlerntemaschine nach Anspruch 1 oder 10, dadurch gekennzeichnet, daß der Abstand der beiden Berge- und Förderschnecken (28, 29) der Berge- und Fördervorrichtung (10) voneinander und zur Schneidscheibe (32) sowie zum Erdboden stufenlos einstellbar ist.

12. Kohlerntemaschine nach Anspruch 1, 10 oder 11, dadurch gekennzeichnet, daß über den Berge- und Förderschnecken (28, 29) der Berge- und Fördervorrichtung (10) und der Schneidscheibe (32) ein umlaufendes Tast- und Führband (48) angeordnet ist, das den Kohlkopf beim Durchwandern der Förderschnecken und beim Schnitt so festhält und führt, daß der Kohlkopf stets mit gleichbleibender Geschwindigkeit und senkrecht stehend transportiert und geschnitten wird.

13. Kohlerntemaschine nach Anspruch 1 oder10, dadurch gekennzeichnet, daß der Antrieb (34) der Schneidscheibe (32) direkt auf der Schneidscheibenachse (33) angeordnet ist.

14. Kohlerntemaschine nach Anspruch 1 oder 10, dadurch gekennzeichnet, daß der Antrieb (34) unterhalb der Schneidscheibe (32) angeordnet ist.

15. Kohlerntemaschine nach einem der Ansprüche 1 oder 10 -14, dadurch gekennzeichnet, daß die Umfangsgeschwindigkeit der Schneidscheibe (32) mindestens das Dreifache der Fahrgeschwindigkeit beträgt.

16. Kohlerntemaschine nach Anspruch 1 oder einem der folgenden, dadurch gekennzeichnet, daß die Erntemaschine (1) heckseitig an den Schlepper (2) angekoppelt ist, wobei das Aufnahmeaggregat seitlich neben dem Schlepper herausragt, so daß der Schlepper beim Erntevorgang neben der zu erntenden Kohlreihe entlangfährt, daß die Maschine vom Schlepper und über ein einzelnes Stützrad (8) getragen ist, das die Last der seitlich herauragenden Bergungs- und Fördervorrichtung aufnimmt, und daß die Erntemaschine (1) ein Übergabe-Förderband (17) zum Transportwagen (4) aufweist.
